# EUROPÄISCHE PATENTSCHRIFT

(11) **EP 0 887 559 B1**
(45) Veröffentlichungstag und Bekanntmachung des Hinweises auf die Patenterteilung: **18.09.2002**
(21) Anmeldenummer: 98106430.6
(22) Anmeldetag: 07.04.1998
(51) Int. Cl.: F15B 13/042

(54) **Mehrwegeventil**
Multiway valve
Distributeur à plusieurs voies

(30) Priorität: 26.06.1997 DE 29711131 U
(43) Veröffentlichungstag der Anmeldung: 30.12.1998
(73) Patentinhaber: FESTO AG & Co, 73734 Esslingen (DE)
(72) Erfinder: Stoll, Kurt, Dr., 73732 Esslingen (DE); Beyer, Dieter, 73728 Esslingen (DE)
(74) Vertreter: Abel, Martin, Dipl.-Ing.

(56) Entgegenhaltungen:
- EP-A- 0 061 650
- EP-A- 0 590 339
- EP-A- 0 822 359
- FR-A- 2 201 410
- GB-A- 1 224 241
- US-A- 3 513 753

## Beschreibung

Die Erfindung betrifft ein Mehrwegeventil, mit einem Ventilgehäuse, mit einer in dem Ventilgehäuse angeordneten Schieberaufnahme, in der sich ein zwischen verschiedenen Steuerstellungen bewegbarer Ventilschieber befindet, der mittels mindestens einer Einschnürung die Verbindung zwischen mit der Schieberaufnahme kommunizierenden Ventilkanälen steuert, unter denen sich wenigstens ein mit einem Verbraucher verbindbarer Arbeitskanal und ein Entlastungskanal befinden, wobei der Ventilschieber in mindestens eine Entlastungsstellung bewegbar ist, in der er eine Verbindung zwischen einem Arbeitskanal und dem Entlastungskanal ermöglicht, und mit einem in dem Ventilgehäuse angeordneten, zwischen dem Arbeitskanal und dem Entlastungskanal wirksamen Rückschlagventil, das in der Lage ist, eine Fluidströmung vom Arbeitskanal zum Entlastungskanal zuzulassen und in Gegenrichtung zu verhindern, und das zu diesem Zweck ein Sperrglied aufweist, das zwischen einer an einer gehäusefesten Dichtfläche anliegenden Sperrstellung und einer von der Dichtfläche abgehobenen Freigabestellung bewegbar ist.

Ein Mehrwegeventil dieser Art geht beispielsweise aus der EP 0 590 339 B1 hervor. Dieses verfügt über ein Ventilgehäuse mit einem in einer Schieberaufnahme angeordneten Ventilschieber, der in eine Entlastungsstellung bewegbar ist, in der ein mit einem Verbraucher verbundener Arbeitskanal mit einem Entlastungskanal kommuniziert, der bei pneumatischen Anwendungen von einem Entlüftungskanal gebildet ist. Somit kann vom Verbraucher Druckmedium, beispielsweise Druckluft, zurückströmen und über das Mehrwegeventil zu einer Drucksenke, beispielsweise zur Atmosphäre, abströmen.

Häufig ist eine größere Anzahl von Mehrwegeventilen gemeinsam an einen Abführkanal angeschlossen, über den das zurückströmende Druckmedium abgeführt wird. Dabei kann unter ungünstigen Bedingungen ein Rückstaudruck auftreten, der sich in den Entlastungskanal der angeschlossenen Mehrwegeventile fortsetzt und zu unkontrollierten Rückströmungen zum angeschlossenen Verbraucher führt. Um diesem Effekt entgegenzuwirken, ist in das Ventilgehäuse ein Rückschlagventil integriert, das zwischen den Entlastungskanal und den Arbeitskanal zwischengeschaltet ist und eine Fluidströmung vom Entlastungskanal zum Arbeitskanal verhindert. Allerdings hat die bekannte Bauform eine nachteilige Vergrößerung des Ventilgehäuses zur Folge, da das Rückschlagventil von einer das Ventilgehäuse durchsetzenden Schraube getragen wird, die seitlich versetzt zur Schieberaufnahme verläuft.

Es ist die Aufgabe der vorliegenden Erfindung, ein Mehrwegeventil mit integriertem Rückschlagventil zu schaffen, das eine kompaktere Bauweise ermöglicht.

Diese Aufgabe wird dadurch gelöst, dass das Sperrglied am Ventilschieber festgelegt ist und dessen Steuerbewegungen mitmacht, wobei es sich in der Entlastungsstellung des Ventilschiebers in einer der Dichtfläche zugeordneten wirksamen Position befindet, in der es in der Lage ist, wahlweise die Sperrstellung oder die Freigabestellung einzunehmen, und dass das Sperrglied koaxial zum Ventilschieber angeordnet ist und eine ringförmige bewegliche Sperrpartie auf weist, die der ebenfalls koaxial zum Ventilschieber angeordneten ringförmigen Dichtfläche axial gegenüberliegt.

Auf diese Weise liegt ein Mehrwegeventil vor, bei dem das Sperrglied des Rückschlagventils vom Ventilschieber selbst getragen wird, so dass auf eine zusätzliche, neben der Schieberaufnahme verlaufende Bohrung zur Aufnahme des Sperrgliedes verzichtet werden kann. Dies gestattet eine überaus kompakte Bauweise des Mehrwegeventils und erlaubt eine kostengünstige Herstellung, insbesondere auch durch spanlose Fertigungsverfahren. Obwohl das Sperrglied am Ventilschieber mit diesem mitbewegbar angeordnet ist und somit je nach Steuerstellung des Ventilschiebers unterschiedliche Axialpositionen einnimmt, ist die Wirksamkeit der Rückschlagfunktion nicht beeinträchtigt. Das Sperrglied ist so am Ventilschieber positioniert, dass es in dessen Entlastungsstellung eine der Dichtfläche zugeordnete und an diese angenäherte wirksame Position einnimmt, in der es in der Lage ist, in der für ein Rückschlagventil typischen Wirkungsweise mit der Dichtfläche zusammenzuarbeiten. In anderen Steuerstellungen des Ventilschiebers kann das Sperrglied ohne weiteres eine von der Dichtfläche entfernte unwirksame Position einnehmen, in der ein Zusammenwirken mit der Dichtfläche nicht möglich ist, da in diesen Fällen die Rückschlagfunktion sowieso nicht benötigt wird.

Aus der einen Stand der Technik gemäß Artikel 54(3) und (4) EPÜ bildenden EP-A-0 822 359 geht ein Mehrwegeventil hervor, das einen zwischen verschiedenen Steuerstellungen bewegbaren Ventilschieber aufweist, der mit einem zu einem Rückschlagventil gehörenden Sperrglied ausgestattet ist. Das Sperrglied ist von einem ringförmigen Lippen-Dichtungsglied gebildet, das einen ungefähr V-förmigen Querschnitt hat und eine flexible Dichtungslippe aufweist, die in einer Entlastungsstellung des Ventilschiebers mit einer sie umschließenden Dichtfläche an der Wandung der Schieberaufnahme zusammenarbeiten kann.

Vorteilhafte Weiterbildungen der Erfindung gehen aus den Unteransprüchen hervor.

Ein besonders kostengünstiger und dennoch funktionssicherer Aufbau liegt vor, wenn das Sperrglied zumindest teilweise und vorzugsweise insgesamt gummielastisch ausgeführt ist und beispielsweise aus einem Elastomermaterial besteht, wobei es insbesondere einen einstückigen Aufbau haben kann.

Vorteilhafterweise ist das Sperrglied als Ringkörper ausgebildet, der im Bereich des Außenumfanges des Ventilschiebers angeordnet ist und insbesondere in einer am Außenumfang des Ventilschiebers vorgesehenen Haltenut festgelegt ist. Bei ausreichend flexibler Ausgestaltung des Sperrglieds kann dieses in die Haltenut eingeknüpft sein.

Die gehäusefeste Dichtfläche befindet sich zweckmäßigerweise an einem dem Sperrglied axial gegenüberliegenden Ringkörper, der ein einstückiger Bestandteil des Ventilgehäuses sein kann, der nach Art eines ringförmigen Radial vorsprunges in die Schieberaufnahme hineinragt. In einer besonders zweckmäßigen Ausgestaltung befindet sich die Dichtfläche allerdings an einer bezüglich des Ventilgehäuses separat ausgeführten ringförmigen Dichtungseinheit, die in der Schieberaufnahme festgelegt ist und deren eigentliche Aufgabe darin besteht, durch Zusammenwirken mit dem Ventilschieber die Steuerstellungen zu definieren. Die Dichtungseinheit hat in diesem Falle eine Doppelfunktion, die sogar erreicht werden kann, ohne die standardmäßig vorhandene Dichtungseinheit zu bearbeiten. Somit besteht der Vorteil, daß man das Mehrwegeventil ohne großen Aufwand wahlweise mit oder ohne Rückschlagventil ausstatten kann, indem man wahlweise ein Sperrglied installiert oder dieses wegläßt. Am Ventilgehäuse selbst sind dabei keine speziellen Bearbeitungen notwendig, so daß sich dieses universell einsetzen läßt, was die Herstellungskosten reduziert, weil keine unterschiedlichen Ventilgehäusetypen zur Verfügung gestellt werden müssen.

Nachfolgend wird die Erfindung anhand der beiliegenden Zeichnung näher erläutert. In dieser zeigen:
- Fig. 1: einen Ausschnitt einer bevorzugten Ausführungsform des erfindungsgemäßen Mehrwegeventils im Längsschnitt, wobei oberhalb der Längsachse des Ventilschiebers eine unwirksame Position und unterhalb dieser Längsachse die wirksame Position des Sperrgliedes gezeigt ist,
- Fig. 2: den in Fig. 1 markierten Ausschnitt II in vergrößerter Darstellung, wobei sich der Ventilschieber in der Entlastungsstellung befindet und das gleichzeitig in der wirksamen Position befindliche Sperrglied die Sperrstellung einnimmt, und
- Fig. 3: den gleichen Ausschnitt II wie in Fig. 2, allerdings bei in die Freigabestellung bewegtem Sperrglied.

Das abgebildete Mehrwegeventil 1 verfügt über ein Ventilgehäuse 2, in dem eine längliche und im wesentlichen zylinderähnliche Schieberaufnahme 3 ausgebildet ist.

In der Schieberaufnahme 3 befinden sich zwei koaxial aufeinanderfolgend angeordnete Ventilschieber 4, 4', die in Richtung ihrer Längsachse 5 gemäß Doppelpfeil 11 axial in beiden Richtungen bewegbar sind, um sie in verschiedenen Steuerstellungen zu positionieren.

Jeder Ventilschieber 4, 4' ist Bestandteil einer eigenen, in dem Mehrwegeventil 1 integrierten Ventileinheit 6, 6' mit der Funktion eines 3/2-Wegeventils. Diese beiden Ventileinheiten 6, 6' sind unabhängig voneinander betreibbar. Da ihr Aufbau und ihre Funktionsweise identisch sind, beschränken sich die nachfolgenden Ausführungen auf die Beschreibung nur einer der Ventileinheiten 6.

Im übrigen könnte anstelle der beiden voneinander unabhängigen Ventilschieber 4, 4' auch nur ein einziger längerer Ventilschieber vorgesehen sein, um nur eine Ventileinheit zu realisieren, die dann eine 5/2- oder 5/3-Wege-Ventilfunktion haben könnte.

Zu der Ventileinheit 6 gehören mehrere und vorliegend drei im Ventilgehäuse 2 verlaufende Ventilkanäle 7, die umfangsseitig in die Schieberaufnahme 3 einmünden und mit axial aufeinanderfolgend angeordneten Abschnitten der Schieberaufnahme 3 kommunizieren. Ein Ventilkanal 7 ist als Arbeitskanal A ausgebildet, der mit einem Zwischenabschnitt 8 der Schieberaufnahme 3 kommuniziert. Er ist andererseits über eine nicht näher dargestellte Druckmittelleitung mit einem zu betätigenden Verbraucher verbindbar, beispielsweise einem fluidbetätigten Antrieb, insbesondere einem Arbeitszylinder.

Der Zwischenabschnitt 8 ist auf einer Axialseite von einem Zuströmabschnitt 9 flankiert, in den ein als Speisekanal P ausgebildeter Ventilkanal 7 einmündet. Der Speisekanal P steht mit einer Druckquelle in Verbindung, die das zum Betrieb des angeschlossenen Verbrauchers benötigte Druckmedium, beispielsweise Druckluft, liefert.

Auf der dem Zuströmabschnitt 9 entgegengesetzten Seite des Zwischenabschnittes 8 befindet sich ein Abströmabschnitt 10 der Schieberaufnahme 3, der mit einem als Entlastungskanal R ausgebildeten Ventilkanal 7 kommuniziert. Der Entlastungskanal R ist bei dem vorliegenden pneumatischen Ventil ein Entlüftungskanal und führt zu einer Drucksenke, beispielsweise zur Atmosphäre.

Der Abströmabschnitt 10 ist gleichzeitig auch der zweiten Ventileinheit 6' zugeordnet, die im übrigen einen separaten Speisekanal und auch einen weiteren separaten Arbeitskanal aufweist, wobei der Aufbau insgesamt spiegelsymmetrisch zu einer Symmetrieebene 12 getroffen sein kann, die den Abströmquerschnitt rechtwinkelig zur Längsachse 5 durchsetzt.

Zwischen jeweils aufeinanderfolgenden Abschnitten der Schieberaufnahme 3 befindet sich eine ringförmige Dichtungseinheit 16. Der Ventilschieber 4 hat zwei mit axialem Abstand aufeinanderfolgend angeordnete zylindrische Steuerabschnitte 14, zwischen denen ein von einer nutartigen Einschnürung gebildeter Überströmabschnitt 15 angeordnet ist.

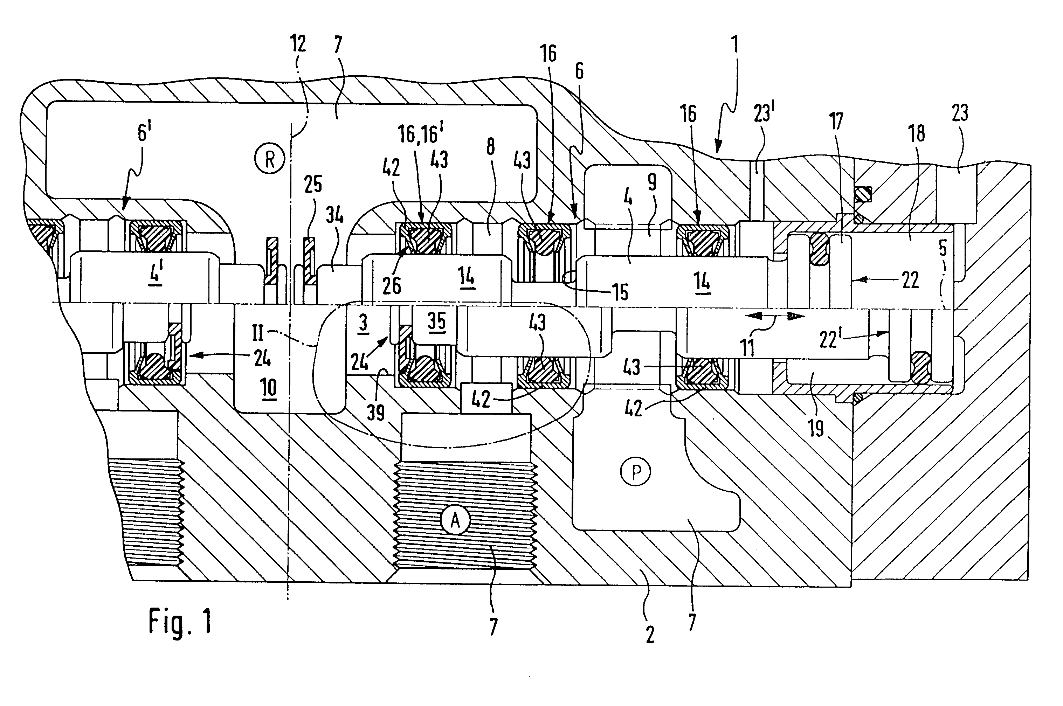

Durch axiale Verlagerung läßt sich der Ventilschieber 4 in zwei Steuerstellungen positionieren, in denen die Steuerabschnitte 14 teils mit unterschiedlichen der Dichtungseinheiten 16 dichtend zusammenwirken. Auf diese Weise sind in einer in Fig. 1 oberhalb der Längsachse 5 gezeigten Arbeitsstellung des Ventilschiebers 4 der Zuströmabschnitt 9 mit dem Zwischenabschnitt 8 verbunden, so daß Druckmedium vom Speisekanal P zum Arbeitskanal A strömen kann. Gleichzeitig ist der Zwischenabschnitt 8 vom Abströmabschnitt 10 abgesperrt. Eine andere, in Fig. 1 unterhalb der Längsachse 5 gezeigte Steuerstellung des Ventilschiebers 4 ist eine Entlüftungsstellung, in der der Zwischenabschnitt 8 mit dem Abströmabschnitt 10 kommuniziert, so daß vom Verbraucher stammendes Druckmedium zum Entlastungskanal R abströmen kann. Gleichzeitig ist hier der Zwischenabschnitt 8 vom Zuströmabschnitt 9 abgesperrt.

Die Betätigung des Ventilschiebers 4 erfolgt beim Ausführungsbeispiel durch Fluidkraft. Hierzu steht der Ventilschieber 4 am einen, dem Zuströmabschnitt 9 benachbarten Ende mit einem Stellkolben 17 in fester Verbindung, der in der Schieberaufnahme 3 einen axial äußeren und einen axial inneren Beaufschlagungsraum 18, 19 dichtend voneinander abteilt und an der dem jeweiligen Beaufschlagungsraum 18, 19 zugewandten Seite eine Beaufschlagungsfläche 22, 22' aufweist. In jeden Beaufschlagungsraum 18, 19 mündet ein im Ventilgehäuse verlaufender Steuerkanal 23, 23', über die ein Betätigungsfluid zuführbar ist, das auf die Beaufschlagungsflächen 22, 22' einwirkt und dadurch den Ventilschieber 4 in Bewegungsrichtung 11 verlagert.

Zur Steuerung der Zufuhr des Betätigungsfluides ist wenigstens einem der Steuerkanäle 23, 23' ein nicht näher dargestelltes elektromagnetisches Vorsteuerventil zugeordnet.

Um den Zuströmabschnitt 9 vom sich anschließenden axial inneren Beaufschlagungsraum 19 fluiddicht abzutrennen, ist wiederum eine ringförmige Dichtungseinheit 16 zwischengefügt, die ständig mit dem einen Steuerabschnitt 14 in Dichtkontakt steht.

Das Mehrwegeventil 1 ist so konzipiert, daß es mit mehreren gleichartigen Ventilen zu einer batterieartigen Einheit zusammengefaßt werden kann. Daher sind der Speisekanal P und der Entlastungskanal R das beim Ausführungsbeispiel plattenartige Ventilgehäuse 2 quer durchsetzend ausgeführt, so daß die Kanäle aneinandergesetzter Mehrwegeventile miteinander kommunizieren und gemeinschaftliche Kanäle vorliegen. Dabei kann es im Betrieb allerdings geschehen, daß im Entlastungskanal R kurzzeitig ein Fluidstau auftritt, der eine Druckerhöhung zur Folge hat, die bei in der Entlastungsstellung befindlichem Ventilschieber 4 ein Rückströmen von Druckmedium zum angeschlossenen Verbraucher zur Folge hat. Dies kann zu Fehlfunktionen am Verbraucher führen. Um dies auszuschließen, ist das Mehrwegeventil 1 mit einem im Ventilgehäuse 2 integrierten Rückschlagventil 24 ausgestattet, das zwischen dem Arbeitskanal A und dem Entlastungskanal R wirksam ist und das in der Lage ist, eine Fluidströmung vom Arbeitskanal A zum Entlastungskanal R zuzulassen und gleichzeitig eine Fluidströmung in der Gegenrichtung zu verhindern.

Zu dem Rückschlagventil 24 gehören ein am Ventilschieber 4 festgelegtes Sperrglied 25 und eine mit dem Sperrglied 25 zusammenwirkende gehäusefeste Dichtfläche 26.

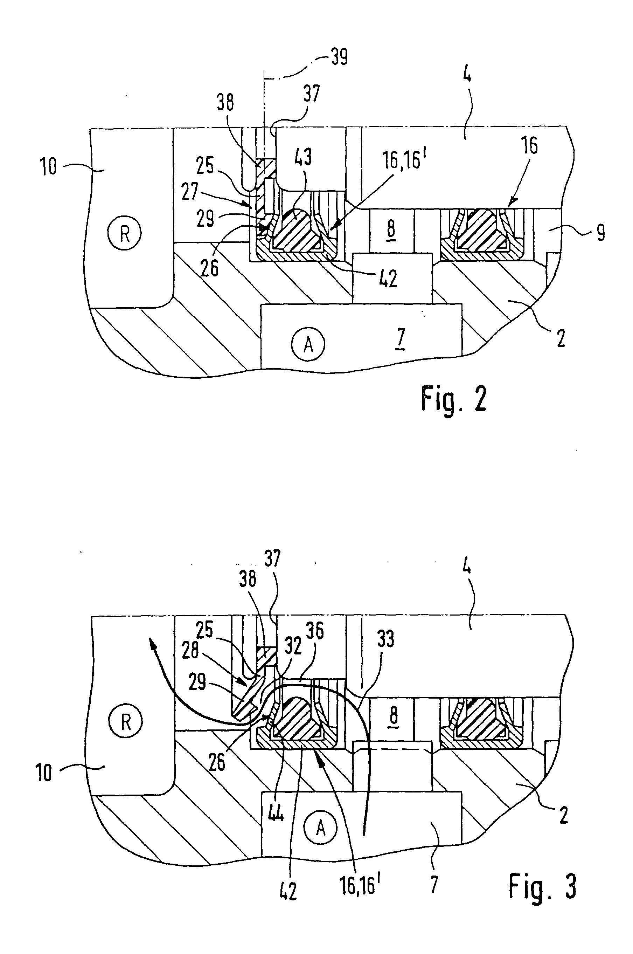

Da das Sperrglied 25 also mit dem Ventilschieber 4 bewegungsgekoppelt ist, macht es dessen Steuerbewegungen mit und befindet sich je nach Steuerbewegung in einer unterschiedlichen Axialposition relativ zur Schieberaufnahme 3. Dabei ist die Anordnung allerdings so getroffen, daß es, wenn sich der Ventilschieber 4 in der Entlastungsstellung befindet, eine in Fig. 1 unterhalb der Längsachse 5 sowie in Fig. 2 und 3 dargestellte wirksame Position einnimmt, in der es auch tatsächlich in der Lage ist, mit der Dichtfläche 26 zusammenzuwirken.

So ist gewährleistet, daß das sich in der wirksamen Position befindende Sperrglied 25 wahlweise eine aus Fig. 2 hervorgehende Sperrstellung 27 oder eine aus Fig. 3 hervorgehende Freigabestellung 28 einnehmen kann.

Die Sperrstellung 27 liegt vor, wenn der im Entlastungskanal R herrschende Druck größer ist als der Druck im Arbeitskanal A. Das Sperrglied 25 liegt dann mit einer Sperrpartie 29 dichtend an der Dichtfläche 26 an und versperrt somit die Fluidkommunikation zwischen dem Abströmabschnitt 10 und dem Zwischenabschnitt 8.

Ist hingegen der im Arbeitskanal A herrschende Druck größer als der Druck im Entlastungskanal R, bewirken die auf das Sperrglied 25 einwirkenden resultierenden Druckkräfte ein Abheben der Sperrpartie 29 von der Dichtfläche 26, so daß die Freigabestellung vorliegt, in der eine Überströmzone 32 zwischen dem Zwischenabschnitt 8 und dem Abströmabschnitt 10 freigegeben ist, was es dem Druckmedium erlaubt, gemäß Pfeil 33 ungehindert vom Verbraucher zum Entlastungskanal R abzuströmen.

Beim Ausführungsbeispiel ist das Sperrglied 25 an dem dem Stellkolben 17 entgegengesetzten axialen Endbereich 34 des Ventilschiebers 4 angeordnet, wobei es an einem sich an den diesem Endbereich 34 zugeordneten Steuerabschnitt 14 axial anschließenden Tragfortsatz 35 des Ventilschiebers 4 befindet. Die Länge des Tragfortsatzes 35 ist so gewählt, daß sich das Sperrglied 25 unabhängig von der momentanen Steuerstellung des Ventilschiebers 4 stets im Abströmabschnitt 10 befindet. Dabei hat der Tragfortsatz 35 einen Außendurchmesser, der geringer ist als der Innendurchmesser der zwischen dem Abströmabschnitt 10 und dem Zwischenabschnitt 8 angeordneten ringförmigen Dichtungseinheit 16, so daß der Tragfortsatz 35 in der Entlastungsstellung des Ventilschiebers 4 zwar durch die vorerwähnte Dichtungseinheit 16 hindurchgreift, gleichwohl aber zwischen ihm und dieser Dichtungseinheit 16 ein ringförmiger Strömungsspalt 36 verbleibt, der dem Druckmedium ein ungehindertes Hindurchströmen gemäß Pfeil 33 gestattet.

Das Sperrglied 25 ist beim Ausführungsbeispiel als einstückiger, aus Material mit gummielastischen Eigenschaften bestehender Ringkörper ausgeführt, der koaxial zum Ventilschieber 4 angeordnet ist. Er sitzt im Bereich des Außenumfanges des Ventilschiebers 4 an dem Tragfortsatz 35. Dieser Tragfortsatz 35 hat eine ringsumlaufende Haltenut 37, in die das Sperrglied 25 mit einem radial innen angeordneten ringförmigen Halteabschnitt 38 eingreift und somit fest gehalten ist. Infolge der flexiblen elastischen Ausführung des ringförmigen Sperrgliedes 25 ist eine einfache Montage in der Haltenut 37 durch Einknüpfen möglich.

Die bereits erwähnte Sperrpartie 29 hat ebenfalls ringförmige Gestalt und ist insbesondere nach Art einer Ringscheibe geformt, deren Scheibenebene im unbetätigten Zustand rechtwinkelig zur Längsachse 5 verläuft.

Die Sperrpartie 29 ragt ausgehend vom Ventilschieber 4 radial nach außen und liegt dabei bezüglich der zu ihr koaxial angeordneten und ebenfalls ringförmig ausgebildeten gehäusefesten Dichtfläche 26 axial gegenüber.

Die ringförmige Dichtfläche 26 könnte prinzipiell an einem mit dem Ventilgehäuse 2 einstückig ausgebildeten ringförmigen Radialvorsprung vorgesehen sein, der von der Innenumfangsfläche 39 der Schieberaufnahme 3 nach radial innen vorsteht. Als vorteilhafter wird es jedoch erachtet, die Dichtfläche 26 an einem in der Schieberaufnahme 3 festgelegten separaten Ringkörper vorzusehen, wobei im Falle des Ausführungsbeispiels dieser Ringkörper von einem Bestandteil der zwischen dem Abströmabschnitt 10 und dem Zwischenabschnitt 8 angeordneten ringförmigen Dichtungseinheit 16, 16' gebildet ist. Diese hat somit eine Doppelfunktion, indem sie zum einen zur Vorgabe der Steuerstellungen mit dem Ventilschieber 4 zusammenarbeitet und zum anderen Bestandteil des Rückschlagventils 24 ist.

Die Dichtungseinheiten 16, 16' haben beim Ausführungsbeispiel jeweils einen im Querschnitt U-ähnlichen Gehäusering 42 aus starrem Metall oder Kunststoff, dessen U-öffnung nach radial innen weist und dem durch die Dichtungseinheit 16, 16' hindurchragenden Ventilschieber 4 zugewandt ist. In dem Gehäusering 42 ist mindestens ein aus insbesondere gummielastischem Dichtmaterial bestehendes ringförmiges Dichtungselement 43 gehalten, das geringfügig radial nach innen über den Gehäusering 42 vorsteht und mit einem Steuerabschnitt 14 in Dichtkontakt steht, wenn dieser durch das Dichtungselement 43 hindurchgreift.

Die Dichtfläche 26 ist an dem Gehäusering 42 vorgesehen und befindet sich insbesondere an der axialen Außenfläche der dem Abströmabschnitt 10 zugewandten ringförmigen Seitenwand 44 des Gehäuseringes 42. Diese kann nach radial innen hin einen leichten Schrägverlauf besitzen, so daß auch die Dichtfläche 26 einen entsprechenden Schrägverlauf haben kann.

Der Gehäusering 42 ist in der Schieberaufnahme 3 axial unbeweglich fixiert. Beim Ausführungsbeispiel wird dies dadurch erreicht, daß der Gehäusering 42 in die Schieberaufnahme 3 eingepreßt ist und im Preßsitz ohne Notwendigkeit des Zwischenfügens einer Dichtung festsitzt.

In der Arbeitsstellung des Ventilschiebers 4 nimmt das Sperrglied 25 die in Fig. 1 oberhalb der Längsachse 5 gezeigte unwirksame Position ein, in der es in einem größeren axialen Abstand zur Dichtfläche 26 und der zugeordneten Dichtungseinheit 16' angeordnet ist. Selbst wenn sich die Sperrpartie 29 verbiegen würde, wäre hier ein Kontakt mit der Dichtfläche 26 nicht möglich.

Bei in die Entlastungsstellung umgeschaltetem Ventilschieber 4 befindet sich das Sperrglied 25 in unmittelbarer Nähe der Dichtungseinheit 16 bzw. der Dichtfläche 26. In seiner unverformten Grundstellung steht es mit der Sperrpartie 29 in Kontakt mit der Dichtfläche 26 (Fig. 2). In der Freigabestellung hingegen ist die Sperrpartie 29 elastisch reversibel verformt und beispielsgemäß in Richtung zum Abströmabschnitt 10 über ihren gesamten Umfang axial umgebogen. Zwischen der Seitenwand 44 und der Sperrpartie 29 liegt dann über den gesamten Umfang ein ringförmiger Zwischenraum vor, der die Überströmzone 32 definiert.

Durch die mit Bezug zur Schieberaufnahme 3 und den Ventilschieber 4 koaxiale Anordnung des Rückschlagventils 24 ergibt sich eine überaus kompakte Bauweise. Die Abmessungen des Ventilgehäuses 2 sind im Vergleich zu einem kein Rückschlagventil enthaltenden Mehrwegeventil 1 nicht größer, da alle Bestandteile des Rückschlagventils innerhalb der Schieberaufnahme 3 untergebracht sind. Das Rückschlagventil garantiert bei in der Entlastungsstellung befindlichem Ventilschieber 4 stets eine sichere Drucktrennung zwischen dem Entlastungskanal R und dem Arbeitskanal A, so daß eine zuverlässige Schaltfunktion gewährleistet ist.

## Patentansprüche

1. Mehrwegeventil, mit einem Ventilgehäuse (2), mit einer in dem Ventilgehäuse (2) angeordneten Schieberaufnahme (3), in der sich ein zwischen verschiedenen Steuerstellungen bewegbarer Ventilschieber (4) befindet, der mittels mindestens einer Einschnürung die Verbindung zwischen mit der Schieberaufnahme (3) kommunizierenden Ventilkanälen (7) steuert, unter denen sich wenigstens ein mit einem Verbraucher verbindbarer Arbeitskanal (A) und ein Entlastungskanal (R) befinden, wobei der Ventilschieber (4) in mindestens eine Entlastungsstellung bewegbar ist, in der er eine Verbindung zwischen einem Arbeitskanal (A) und dem Entlastungskanal (R) ermöglicht, und mit einem in dem Ventilgehäuse (2) angeordneten, zwischen dem Arbeitskanal (A) und dem Entlastungskanal (R) wirksamen Rückschlagventil (24), das in der Lage ist, eine Fluidströmung vom Arbeitskanal (A) zum Entlastungskanal (R) zuzulassen und in Gegenrichtung zu verhindern, und das zu diesem Zweck ein Sperrglied (25) aufweist, das zwischen einer an einer gehäusefesten Dichtfläche (26) anliegenden Sperrstellung und einer von der Dichtfläche (26) abgehobenen Freigabestellung bewegbar ist, **dadurch gekennzeichnet, dass** das Sperrglied (25) am Ventilschieber (4) festgelegt ist und dessen Steuerbewegungen mitmacht, wobei es sich in der Entlastungsstellung des Ventilschiebers (4) in einer der Dichtfläche (26) zugeordneten wirksamen Position befindet, in der es in der Lage ist, wahlweise die Sperrstellung oder die Freigabestellung einzunehmen, und dass das Sperrglied (25) koaxial zum Ventilschieber (4) angeordnet ist und eine ringförmige bewegliche Sperrpartie (29) aufweist, die der ebenfalls koaxial zum Ventilschieber (4) angeordneten ringförmigen Dichtfläche (26) axial gegenüberliegt.

2. Mehrwegeventil nach Anspruch 1, **dadurch gekennzeichnet, dass** das Sperrglied (25) zumindest teilweise und vorzugsweise insgesamt aus Material mit gummielastischen Eigenschaften besteht.

3. Mehrwegeventil nach Anspruch 1 oder 2, **dadurch gekennzeichnet, dass** das Sperrglied (25) ein einstückiger Körper ist.

4. Mehrwegeventil nach einem der Ansprüche 1 bis 3, **dadurch gekennzeichnet, dass** das Sperrglied (25) ein koaxial zum Ventilschieber (4) angeordneter Ringkörper ist.

5. Mehrwegeventil nach einem der Ansprüche 1 bis 4, **dadurch gekennzeichnet, dass** das Sperrglied (25) im Bereich des Außenumfanges des Ventilschiebers (4) angeordnet ist.

6. Mehrwegeventil nach Anspruch 5, **dadurch gekennzeichnet, dass** das Sperrglied (25) in einer am Außenumfang des Ventilschiebers (4) vorgesehenen Haltenut (37) festgelegt ist.

7. Mehrwegeventil nach einem der Ansprüche 1 bis 6, **dadurch gekennzeichnet, dass** die Dichtfläche (26) an einer ringförmigen Dichtungseinheit (16) vorgesehen ist, die den Ventilschieber (4) koaxial umschließt und gehäusefest festgelegt ist und die mit dem Ventilschieber (4) zur Vorgabe der Steuerstellungen zusammenarbeitet.

8. Mehrwegeventil nach Anspruch 7, **dadurch gekennzeichnet, dass** die Dichtfläche (26) an einem bezüglich des Ventilgehäuses (2) festgelegten Gehäusering (42) der Dichtungseinheit (16) vorgesehen ist, an dem wenigstens ein zur dichtenden Zusammenarbeit mit dem Ventilschieber (4) geeignetes ringförmiges Dichtelement (43) gehalten ist.

9. Mehrwegeventil nach einem der Ansprüche 1 bis 8, **dadurch gekennzeichnet, dass** mindestens ein Ventilkanal (7) als mit einer Druckquelle verbindbarer Speisekanal (P) ausgebildet ist und der Ventilschieber (4) in eine Arbeitsstellung bewegbar ist, in der der Arbeitskanal (A) vom Entlastungskanal (R) abgetrennt und mit dem Speisekanal (P) verbunden ist, wobei das Sperrglied (25) in der Arbeitsstellung des Ventilschiebers (4) eine im Vergleich zur wirksamen Position mit größerem Abstand zu der Dichtfläche (26) angeordnete unwirksame Position einnimmt.

10. Mehrwegeventil nach einem der Ansprüche 1 bis 9, **dadurch gekennzeichnet, dass** das Sperrglied (25) an einem axialen Endbereich des Ventilschiebers (4) angeordneter ist.

11. Mehrwegeventil nach einem der Ansprüche 1 bis 10, **gekennzeichnet durch** eine Ausgestaltung als 3/2-Wegeventil.

## Claims

1. Multiway valve with a valve housing (2), with a spool mount (3) located in a valve housing (2) and in which is located a valve spool (4) capable of movement between different control positions, which by means of one or more constrictions controls the connection between valve passages (7) communicating with the spool mount (3), said valve passages including at least one operating passage (A) connectable to a load, and a vent passage (R), wherein the valve spool (4) is movable into one or more venting positions in which it makes possible a connection between an operating passage (A) and the vent passage (R), and with a non-return valve (24) located in the valve housing (2) and operative between the operating passage (A) and the vent passage (R) and which is in a position to allow a fluid flow from the operating passage (A) to the vent passage (R) and to block it in the opposite direction, and which has for this purpose a blocking element (25) which is movable between a blocking position fitting against a sealing face (26) fixed to the housing and a release position lifted from the sealing face (26), **characterised in that** the blocking element (25) is fixed to the valve spool (4) and accompanies the control movements of the latter, wherein in the venting position of the valve spool (4) it is in an operative position assigned to the sealing face (26), in which it is able to assume optionally the blocking position or the release position, and that the blocking element (25) is arranged coaxially to the valve spool (4) and has an annular movable blocking section (29) lying axially opposite the annular sealing face (26) which is likewise coaxial to the valve spool (4).

2. Multiway valve according to claim 1, **characterised in that** the blocking element (25) is at least partially and preferably wholly made of material with rubber-elastic properties.

3. Multiway valve according to claim 1 or 2, **characterised in that** the blocking element (25) is a one-piece body.

4. Multiway valve according to any of claims 1 to 3, **characterised in that** the blocking element (25) is an annular body mounted coaxially to the valve spool (4).

5. Multiway valve according to any of claims 1 to 4, **characterised in that** the blocking element (25) is located in the area of the outer periphery of the valve spool (4).

6. Multiway valve according to claim 5, **characterised in that** the blocking element (25) is fixed in a retaining slot (37) provided on the outer periphery of the valve spool (4).

7. Multiway valve according to any of claims 1 to 6, **characterised in that** the sealing face (26) is provided on an annular seal unit (16) which coaxially encompasses the valve spool (4) and is faced to the housing, and which works in conjunction with the valve spool (4) to preset the control positions.

8. Multiway valve according to claim 7, **characterised in that** the sealing face (26) is provided on a housing ring (42) of the seal unit (16) which is fixed relative to the valve housing (2), and on which is mounted an annular seal element (43) suitable for cooperating with the valve spool (4) in sealing.

9. Multiway valve according to any of claims 1 to 8, **characterised in that** one or more valve passages (7) is in the form of a feed passage (P) which may be connected to a pressure source, and the valve spool (4) may be moved into an operating position in which the operating passage (A) is isolated from the vent passage (R) and is connected to the feed passage (P), wherein the blocking element (25) assumes - in the operating position of the valve spool (4) - an inoperative position at a greater distance from the sealing face (26) than in the operative position.

10. Multiway valve according to any of claims 1 to 9, **characterised in that** the blocking element (25) is located at an axial end area of the valve spool (4).

11. Multiway valve according to any of claims 1 to 10, **characterised by** being designed as a 3/2-way valve.

## Revendications

1. Soupape à plusieurs voies comportant un boîtier de soupape (2), comportant un logement de tiroir (3) disposé dans le boîtier de soupape (2) dans lequel se trouve un tiroir de soupape (4) déplaçable entre différentes positions de commande, lequel commande, au moyen d'au moins un étranglement, la liaison entre des canaux de soupape (7) qui communiquent avec le logement de tiroir (3) et sous lesquels se trouve au moins un canal de travail (A), qui peut être relié à un récepteur, et un canal de décharge (R), le tiroir de soupape (4) étant déplaçable dans au moins une position de décharge dans laquelle il permet une liaison entre un canal de travail (A) et le canal de décharge (R), et comportant un clapet de non-retour (24) disposé dans le boîtier de soupape (2), qui agit entre le canal de travail (A) et le canal de décharge (R) et qui est apte à autoriser une circulation du fluide du canal de travail (A) vers le canal de décharge (R) et de l'empêcher dans le sens contraire, et qui, à cet effet, comporte un organe d'arrêt (25) qui est déplaçable entre une position d'arrêt, s'appliquant contre une surface d'étanchéité (26) solidaire du boîtier, et une position d'autorisation soulevée de la surface d'étanchéité (26), **caractérisée en ce que** l'organe d'arrêt (25) est fixé au tiroir de soupape (4) et suit ses mouvements de commande, et se trouve, dans la position de décharge du tiroir de soupape (4), dans une position active associée à la surface d'étanchéité (26), dans laquelle il est apte à prendre au choix la position d'arrêt ou la position d'autorisation, et **en ce que** l'organe d'arrêt (25) est disposé coaxialement au tiroir de soupape (4) et présente une partie d'arrêt (29) mobile, de forme annulaire, qui fait face axialement à la surface d'étanchéité (26) annulaire disposée également coaxialement au tiroir de soupape (4).

2. Soupape à plusieurs voies selon la revendication 1, **caractérisée en ce que** l'organe d'arrêt (25) est constitué au moins en partie, de préférence dans sa totalité, d'une matière qui présente les propriétés élastiques du caoutchouc.

3. Soupape à plusieurs voies selon la revendication 1 ou 2, **caractérisée en ce que** l'organe d'arrêt (25) est un corps d'un seul tenant.

4. Soupape à plusieurs voies selon l'une des revendications 1 à 3, **caractérisée en ce que** l'organe d'arrêt (25) est un corps annulaire disposé coaxialement au tiroir de soupape (4).

5. Soupape à plusieurs voies selon l'une des revendications 1 à 4, **caractérisée en ce que** l'organe d'arrêt (25) est disposé dans la zone du pourtour extérieur du tiroir de soupape (4).

6. Soupape à plusieurs voies selon la revendication 5, **caractérisée en ce que** l'organe d'arrêt (25) est fixé dans une rainure de maintien (37) prévue sur le pourtour extérieur du tiroir de soupape (4).

7. Soupape à plusieurs voies selon l'une des revendications 1 à 6, **caractérisée en ce que** la surface d'étanchéité (26) est prévue sur une unité d'étanchéité (16) de forme annulaire qui entoure coaxialement le tiroir de soupape (4) et est fixée solidairement sur le boîtier, et qui coopère avec le tiroir de soupape (4) pour définir les positions de commande.

8. Soupape à plusieurs voies selon la revendication 7, **caractérisée en ce que** la surface d'étanchéité (26) est prévue sur une bague de boîtier (42) de l'unité d'étanchéité (16), laquelle bague est fixée par rapport au boîtier de soupape (2) et est maintenue sur au moins un élément d'étanchéité (43) de forme annulaire propre à coopérer pour l'étanchéité avec le tiroir de soupape (4).

9. Soupape à plusieurs voies selon l'une des revendications 1 à 8, **caractérisée en ce qu'**au moins un canal de soupape (7) est réalisé en tant que canal d'alimentation (P) pouvant être relié à une source de pression, et le tiroir de soupape (4) est déplaçable dans une position de travail dans laquelle le canal de travail (A) est séparé du canal de décharge (R) et est relié au canal d'alimentation (P), en position de travail du tiroir de soupape (4) l'organe d'arrêt (25) prenant une position inactive disposée à plus grande distance de la surface d'étanchéité (27) qu'en position active.

10. Soupape à plusieurs voies selon l'une des revendications 1 à 9, **caractérisée en ce que** l'organe d'arrêt (25) est disposé dans une zone terminale axiale du tiroir de soupape (4).

11. Soupape à plusieurs voies selon l'une des revendications 1 à 10, **caractérisée par** une forme de réalisation en soupape à 3/2 voies.
